# EUROPEAN PATENT APPLICATION

(11) **EP 4 270 613 A1**
(43) Date of publication of application: **01.11.2023**
(21) Application number: 21910571.5
(22) Date of filing: 16.12.2021
(51) Int. Cl.: H01M 50/152, H01M 50/159, H01M 50/164, H01M 50/167, H01M 50/184, H01M 50/186, H01M 50/191, H01M 50/197, H01M 50/342

(54) **HERMETICALLY SEALED BATTERY**

(30) Priority: 22.12.2020 JP 2020212201
(71) Applicant: Panasonic Energy Co., Ltd., Osaka 570-8511 (JP); Panasonic Holdings Corporation, Osaka 571-8501 (JP)
(72) Inventor: YAMASHITA, Shuichi, Kadoma-shi, Osaka 571-0057 (JP); FUKUOKA, Takahiro, Kadoma-shi, Osaka 571-0057 (JP); SUGIMOTO, Shuji, Kadoma-shi, Osaka 571-0057 (JP); MORI, Toshihiko, Kadoma-shi, Osaka 571-0057 (JP)
(74) Representative: Novagraaf International SA
(86) International application number: PCT/JP2021/046433
(87) International publication number: WO 2022/138423

(57) **Abstract**

A nonaqueous electrolyte secondary battery (10) is provided with a bottomed tubular outer can (16) accommodating an electrode body (14), and a sealing body (17) for sealing an opening portion of the outer can (16). A crimped portion (31) for crimping and securing the sealing body (17) is formed in the outer can (16) by bending the edge portion of the opening portion inward in the radial direction, and the sealing body (17) includes a rupture disk (24), a cathode cap (27) including a flange (27a), and a metal height adjusting portion (40) for adjusting the height of the crimped portion (31).

## Description

### TECHNICAL FIELD

The present disclosure generally relates to a sealed battery, and more particularly to sealing of an exterior can of a battery.

### BACKGROUND ART

Cylindrical non-aqueous electrolyte secondary batteries are widely known that comprise a bottomed tubular exterior can, a sealing assembly closing an opening of the exterior can, and a gasket interposed between the exterior can and the sealing assembly. At the exterior can, a crimped portion is generally formed by folding the edge of the opening inward to press down the sealing assembly via the gasket. Notably, in such a non-aqueous electrolyte secondary battery, for example, a positive electrode lead is connected to an inner surface of the sealing assembly, the sealing assembly working as a positive electrode external terminal, and a negative electrode lead is connected to an inner surface of the exterior can, the exterior can working as a negative electrode external terminal.

Sealed batteries, especially, non-aqueous electrolyte secondary batteries are spreading over in-car applications, electric power ones, and power storage ones, and depending on any of these applications, a large number of those batteries are coupled in series and/or in parallel into a module, which is mounted on a product. Recently, for the main purposes of improving design of space efficiency and the like and productivity on the module, there has been being employed a technique of making batteries into a module with these oriented in one direction. This results in external leads to be respectively welded to the positive electrode cap and the crimped portion of the exterior can which is on the negative electrode side, and in order to secure welding quality and to improve the productivity, it is requested that heights of the positive electrode cap and the crimped portion of the exterior can are in a desired height relationship.

In order to handle this, one can consider to make the height of the positive electrode cap provided in the sealing assembly small to match the height of the crimped portion. Nevertheless, in this case, openings on the positive electrode cap cannot be sufficiently secured, which problematically causes exhaust performance of the battery after operation of a safety valve to deteriorate.

### CITATION LIST

### PATENT LITERATURE

PATENT LITERATURE 1: International Publication No. WO 2014/017091

### SUMMARY

### TECHNICAL PROBLEM

PATENT LITERATURE 1 discloses a battery in which an insulating plate is arranged between the sealing assembly and the crimped portion. The insulating plate in PATENT LITERATURE 1 is provided for preventing, in the case of the gasket being molten in a high temperature environment, short circuit between the sealing assembly and the battery case. It is known that the material of such an insulating plate is lower in mechanical strength than the gasket, which insulating plate is easily caused to deform during crimping, and hence, this is not suitable for the purpose of adjusting the height of the crimped portion with high accuracy.

It is an advantage of the present disclosure to provide a sealed battery which may adjust the height of the crimped portion of the exterior can without exhaust performance of the battery deteriorating to make the heights of the positive electrode cap and the crimped portion be in a desired height relationship.

### SOLUTION TO PROBLEM

A sealed battery according to the present disclosure comprises: a bottomed tubular exterior can that houses an electrode assembly; and a sealing assembly that closes an opening of the exterior can, wherein at the exterior can, a crimped portion is formed by folding an end of the opening inward in a radial direction for crimping and fixing the sealing assembly. The sealing assembly has: a rupture disc; a positive electrode cap having a flange; and a metal-made height adjusting portion for adjusting a height of the crimped portion.

### ADVANTAGEOUS EFFECT OF INVENTION

With a sealed battery according to the present disclosure, a height of an external terminal may be adjusted by virtue of providing a metal-made height adjusting portion in a sealing assembly.

### BRIEF DESCRIPTION OF DRAWINGS

FIG. 1 is a sectional view of a non-aqueous electrolyte secondary battery as an example of embodiments.
FIG. 2 is an expanded sectional view of the vicinity of a crimped portion of a non-aqueous electrolyte secondary battery as an example of embodiments.
FIG. 3 is an expanded sectional view of the vicinity of a crimped portion of a non-aqueous electrolyte secondary battery as another example of embodiments.
FIG. 4 is an expanded sectional view of the vicinity of a crimped portion of a non-aqueous electrolyte secondary battery as still another example of embodiments.
FIG. 5 is an expanded sectional view of the vicinity of a crimped portion of a non-aqueous electrolyte secondary battery as still another example of embodiments.
FIG. 6 is an expanded sectional view of the vicinity of a crimped portion of a non-aqueous electrolyte secondary battery as still another example of embodiments.

### DESCRIPTION OF EMBODIMENTS

Hereafter, embodiments of the present disclosure will be described in detail with reference to the drawings. In the description below, specific shapes, materials, orientations, numerical values, and the like are exemplary illustrations to facilitate understanding of the present disclosure, and can be properly modified to meet applications, purposes, specifications, and the like. Moreover, it is supposed from the first that constituents of the embodiments and the modifications described below are selectively combined.

While as a sealed battery, a non-aqueous electrolyte secondary battery 10 is hereafter exemplarily illustrated in which an electrode assembly 14 is housed in a bottomed tubular exterior can 16 and that comprises a sealing assembly 17 closing the opening of the exterior can 16, other than a non-aqueous electrolyte secondary battery, applications to various types of sealed batteries such as a nickel-hydrogen secondary battery are possible.

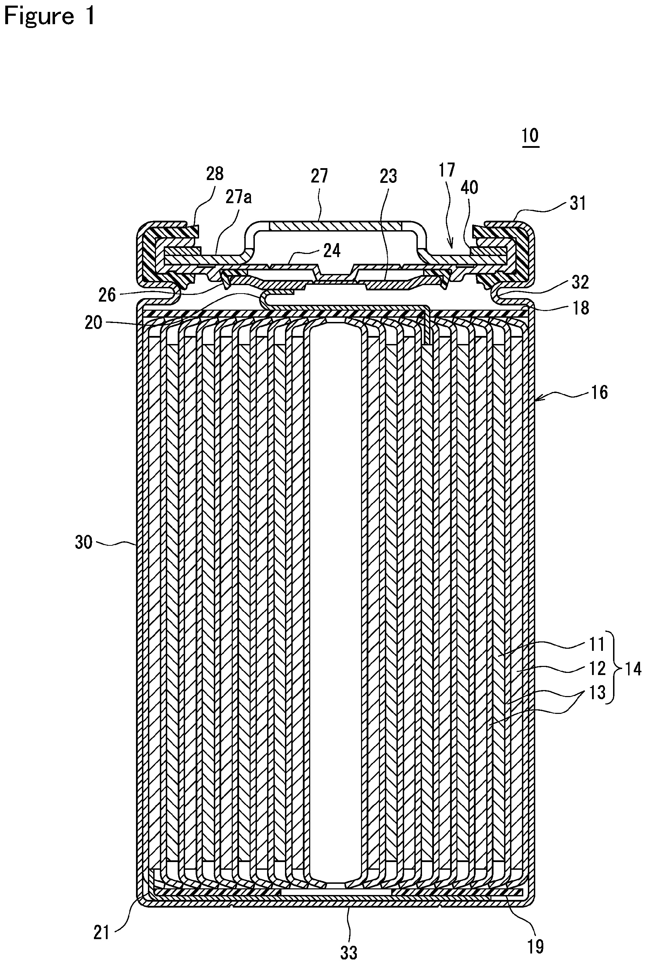

FIG. 1 is a sectional view of the non-aqueous electrolyte secondary battery 10 according to an embodiment of the present disclosure. As shown in FIG. 1, the non-aqueous electrolyte secondary battery 10 comprises: the bottomed tubular exterior can 16; the sealing assembly 17 closing the opening of the exterior can 16; and a gasket 28 interposed between the exterior can 16 and the sealing assembly 17. Moreover, the non-aqueous electrolyte secondary battery 10 comprises the electrode assembly 14 and an electrolyte housed in the exterior can 16. The electrode assembly 14 includes a positive electrode 11, a negative electrode 12, and separators 13, and has a structure having the positive electrode 11 and the negative electrode 12 wound into a spiral shape via the separators 13.

The non-aqueous electrolyte includes a non-aqueous solvent and an electrolyte salt dissolved in the non-aqueous solvent. For the non-aqueous solvent, there may be used, for example, esters, ethers, nitriles, amides, a mixed solvent of two or more of these, and the like. The non-aqueous solvent may contain a halogen-substituted substance having halogen atom(s) such as fluorine substituted for at least one or some of hydrogens as a solvent. Notably, the non-aqueous electrolyte is not limited to a liquid electrolyte but may be a solid electrolyte using a gelatinous polymer or the like. For the electrolyte salt, a lithium salt such as LiPF6 is used.

The electrode assembly 14 has the long strip-shaped positive electrode 11, the long strip-shaped negative electrode 12, and the two long strip-shaped separators 13. Moreover, the electrode assembly 14 has a positive electrode lead 20 joined to the positive electrode 11 and a negative electrode lead 21 joined to the negative electrode 12. In order to restrain lithium from precipitating, the negative electrode 12 is formed to have a certain size larger than that of the positive electrode 11, being formed to be longer in the longitudinal direction and the width direction (transverse direction) than the positive electrode 11. Moreover, the two separators 13 are formed to have a certain size at least larger than that of the positive electrode 11 and, for example, are arranged so as to interpose the positive electrode 11.

The positive electrode 11 has a positive electrode current collector and positive electrode mixture layers formed on both surfaces of the positive electrode current collector. For the positive electrode current collector, there can be used foil of a metal, such as aluminum or aluminum alloy, that is stable in the potential range of the positive electrode 11, a film having the metal disposed on its surface layers, and the like. The positive electrode mixture layers include a positive electrode active material, a conductive agent, and a binder agent. The positive electrode 11 can be produced, for example, by applying, on the positive electrode current collector, positive electrode mixture slurry including the positive electrode active material, the conductive agent, the binder agent, and the like, and drying the coating film and afterward compressing it to form the positive electrode mixture layers on both surfaces of the current collector.

The positive electrode active material is composed with lithium-containing metal composite oxide being as a main component. Examples of metal element(s) contained in the lithium-containing metal composite oxide include Ni, Co, Mn, Al, B, Mg, Ti, V, Cr, Fe, Cu, Zn, Ga, Sr, Zr, Nb, In, Sn, Ta, W, and the like. A preferable example of the lithium-containing metal composite oxide is a composite oxide containing at least one of the group consisting of Ni, Co, Mn, and Al.

Examples of the conductive agent included in the positive electrode mixture layers can include carbon materials such as carbon black, acetylene black, Ketjen black, and graphite. Examples of the binder agent included in the positive electrode mixture layers can include fluorine resins such as polytetrafluoroethylene (PTFE) and polyvinylidene fluoride (PVdF), polyacrylonitrile (PAN), polyimides, acrylic resins, and polyolefins, and the like. There may be used together with these resins cellulose derivatives such as carboxymethylcellulose (CMC) and its salt, polyethylene oxide (PEO), and the like.

The negative electrode 12 has a negative electrode current collector and negative electrode mixture layers formed on both surfaces of the negative electrode current collector. For the negative electrode current collector, there can be used foil of a metal, such as copper or copper alloy, that is stable in the potential range of the negative electrode 12, a film having the metal disposed on its surface layers, and the like. The negative electrode mixture layers include a negative electrode active material and a binder agent. The negative electrode 12 can be produced, for example, by applying, on the negative electrode current collector, negative electrode mixture slurry including the negative electrode active material, the binder agent, and the like, and drying the coating film and afterward compressing it to form the negative electrode mixture layers on both surfaces of the current collector.

In general, for the negative electrode active material, there is used a carbon material that reversibly stores and releases lithium ions. Preferable carbon materials include graphite such as natural graphite such as flaky graphite, massive graphite or earthy graphite, or artificial graphite such as massive artificial graphite or graphitized mesophase carbon microbeads. The negative electrode mixture layers may include a Si-containing compound as the negative electrode active material. Moreover, for the negative electrode active material, there may be used a metal, other than Si, that is alloyed with lithium, an alloy containing the metal, a compound containing the metal, and the like.

While for the binder agent included in the negative electrode mixture layers, there may be used fluorine resins, PAN, polyimide resins, acrylic resins, polyolefin resins, and the like as with the case of the positive electrode 11, there is preferably used styrenebutadiene rubber (SBR) or its modified substance. The negative electrode mixture layers may include, for example, in addition to SBR or the like, CMC or its salt, polyacrylic acid (PAA) or its salt, polyvinyl alcohol, and/or the like.

For the separators 13, there is used a porous sheet that has ion permeability and insulation ability. Specific examples of the porous sheet include a microporous thin film, woven fabric, nonwoven fabric, and the like. For a material of the separators 13, olefin resins such as polyethylene and polypropylene, cellulose, and the like are preferable. Each separator 13 may have any of a single layer structure and a laminate structure. A heat resistant layer and/or the like may be formed on a surface of the separator 13. Notably, while the negative electrode 12 may form the winding starting end of the electrode assembly 14, in general, the separators 13 are elongated beyond the end of the negative electrode 12 on the winding starting side, and the ends of the separators 13 on the winding starting side form the winding starting end of the electrode assembly 14.

In the example shown in FIG. 1, the positive electrode lead 20 is electrically connected to the intermediate portion of the positive electrode core in the winding direction, and the negative electrode lead 21 is electrically connected to the winding finishing end of the negative electrode core in the winding direction. Nevertheless, the negative electrode lead may be electrically connected to the winding starting end of the negative electrode core in the winding direction. Otherwise, the electrode assembly may have two negative electrode leads, one negative electrode lead being electrically connected to the winding starting end of the negative electrode core in the winding direction, the other negative electrode lead being electrically connected to the winding finishing end of the negative electrode core in the winding direction. Otherwise, the negative electrode and the exterior can may be electrically connected together by bringing the end of the negative electrode core on the winding finishing side in the winding direction into contact with an inner surface of the exterior can.

As shown in FIG. 1, the non-aqueous electrolyte secondary battery 10 further has an insulating plate 18 arranged on the upper side of the electrode assembly 14 and an insulating plate 19 arranged on the lower side of the electrode assembly 14. In the example shown in FIG. 1, the positive electrode lead 20 attached to the positive electrode 11 extends to the sealing assembly 17 side through a through hole of the insulating plate 18, and the negative electrode lead 21 attached to the negative electrode 12 extends to a bottom 33 side of the exterior can 16 via the outside of the insulating plate 19. The positive electrode lead 20 is connected to a lower surface of a terminal plate 23 which is the bottom plate of the sealing assembly 17 by welding or the like, and a positive electrode cap 27 which is a top board, of the sealing assembly 17, electrically connected to the terminal plate 23 works as a positive electrode external terminal. Moreover, the negative electrode lead 21 is connected to an inner surface of the bottom 33 of the exterior can 16 by welding or the like, and the exterior can 16 works as a negative electrode external terminal. Structures of the sealing assembly 17 will be described in detail later.

The exterior can 16 is a metal-made container having a bottomed tubular portion. An annular gasket 28 attains hermetical sealing between the exterior can 16 and the sealing assembly 17, and the hermetical sealing leads to sealing of the inner space of the battery. The gasket 28 is pinched and held by the exterior can 16 and the sealing assembly 17 and insulates the sealing assembly 17 from the exterior can 16. The gasket 28 has a role as a sealing material for holding gastightness inside the battery, which prevents an electrolyte solution from leaking. Moreover, the gasket 28 also has a role as an insulating material for preventing short circuit between the exterior can 16 and the sealing assembly 17.

The exterior can 16 has a projection protruding inward in the radial direction on the inner periphery side by providing a grooved portion 32 at a portion, in the height direction, of the cylindrical outer peripheral surface. The grooved portion 32 can be formed, for example, by performing spinning processing inward in the radial direction on a portion of the cylindrical outer peripheral surface to recess the portion inward in the radial direction. The exterior can 16 has a bottomed tubular portion 30 including the grooved portion 32 and an annular crimped portion 31. The bottomed tubular portion 30 houses the electrode assembly 14 and the non-aqueous electrolyte, and the crimped portion 31 extends inward in the radial direction by being folded inward in the radial direction from the end on the opening side of the bottomed tubular portion 30. The crimped portion 31 is formed when an upper end of the exterior can 16 is folded inward to be crimped onto the peripheral edge side of the sealing assembly 17. The crimping fixes the sealing assembly 17 to the exterior can 16 by pinching and holding the sealing assembly 17, together with the gasket 28, with the crimped portion 31 and the upper side of the grooved portion 32.

### (First Embodiment)

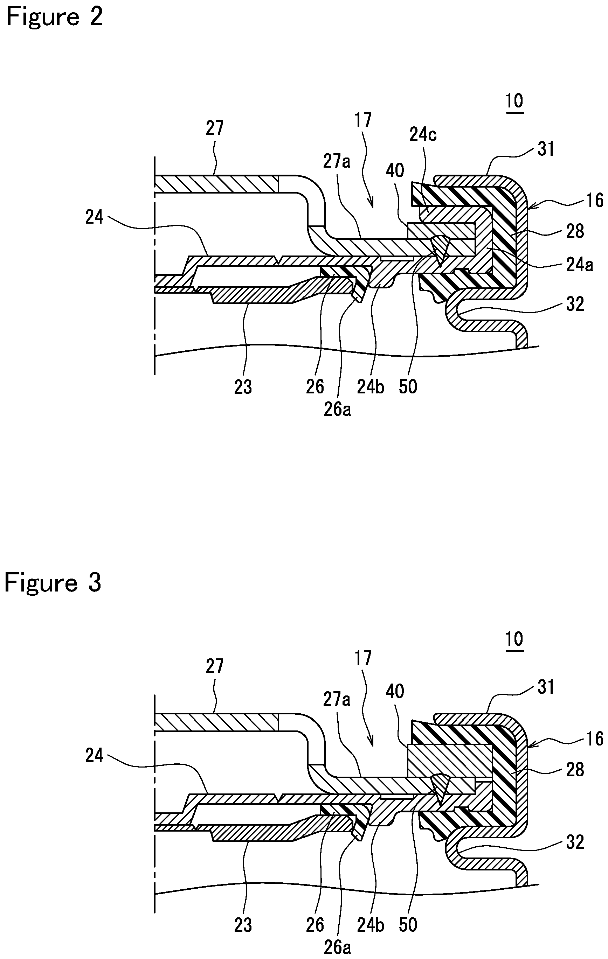

Next, assembling steps of the sealing assembly 17 are described. Height adjustment of the crimped portion 31 is described afterward. FIG. 2 is a sectional view having the vicinity of a crimped portion of the non-aqueous electrolyte secondary battery 10 according to a first embodiment of the present disclosure expanded.

As shown in FIG. 2, the sealing assembly 17 has the terminal plate 23, an insulating plate 26, a rupture disc 24, the positive electrode cap 27, and a metal-made spacer 40. First, components of the sealing assembly 17 before assembling are described.

The terminal plate 23 is made of a metal and formed into a disc shape.

The insulating plate 26 has a ring shape and has a standing portion 26a on the peripheral edge in the circumferential direction. An inner diameter of the standing portion 26a of the insulating plate 26 is approximately equal to an outer diameter of the terminal plate 23. The standing portion 26a of the insulating plate 26 is formed such that the terminal plate 23 can be inserted thereinto.

The rupture disc 24 is formed into a bottomed tubular shape having a standing portion 24a on the peripheral edge. On a surface of the rupture disc 24 on the opposite side to the direction where the standing portion 24a extends, the rupture disc 24 has a projection 24b in the inner diameter direction and in the circumferential direction. An inner diameter of the projection 24b of the rupture disc 24 is approximately equal to an outer diameter of the insulating plate 26 in the state where the terminal plate 23 is inserted. Before the sealing assembly 17 is assembled, a folding portion 24c mentioned later is in the state before being folded, and is to be folded in an assembling step for the sealing assembly 17.

The positive electrode cap 27 is made of a metal and formed into a disc shape a center portion of which protrudes, and has a flange 27a extending in the outer circumferential direction. The flange 27a has an outer diameter equal to the inner diameter of the standing portion 24a of the rupture disc 24 and is formed such that the flange 27a can be inserted into the standing portion 24a before the folding portion 24c is formed.

The metal-made spacer 40 is made of a metal and formed into a ring shape. An inner diameter of the metal-made spacer 40 is larger than an outer diameter of the protruding portion of the positive electrode cap 27, and the metal-made spacer 40 has an outer diameter approximately equal to that of the flange 27a and is formed so as to be able to be inserted into the standing portion 24a before the folding portion 24c is formed.

The sealing assembly 17 of the present embodiment can be formed with these components in the following steps.
Step 1: inserting the terminal plate 23 into the standing portion 26a of the insulating plate 26.
Step 2: inserting the terminal plate 23 which is inserted into the insulating plate 26 into the projection 24b of the rupture disc 24.
Step 3: crimping the projection 24b of the rupture disc 24 inward in the radial direction to fix the insulating plate 26 and the terminal plate 23.
Step 4: connecting the terminal plate 23 and the center portion of the rupture disc 24 by welding. Thereby, the terminal plate 23 and the rupture disc 24 are mechanically and electrically connected.
Step 5: inserting the positive electrode cap 27 into the standing portion 24a of the rupture disc 24. Thereby, the flange 27a of the positive electrode cap 27 comes into contact with the rupture disc 24.
Step 6: welding the positive electrode cap 27 and the rupture disc 24 at their outer peripheries. Thereby, the positive electrode cap 27 and the rupture disc 24 are mechanically and electrically connected.
Step 7: inserting the metal-made spacer 40 into the standing portion 24a of the rupture disc 24 into which the positive electrode cap 27 is inserted.
Step 8: crimping the standing portion 24a of the rupture disc 24 inward in the radial direction to fold the end of the standing portion 24a so as to come into contact with the metal-made spacer 40, forming the ring-shaped folding portion 24c.

The sealing assembly 17 is shaped as above. Notably, these steps are exemplary and can be modified depending on the shapes of the components. Moreover, the order of the steps is not limited to this.

The gasket 28 before being attached to the sealing assembly 17 comprises a cylindrical tubular portion and a ring portion extending inward in the radial direction from one end of the tubular portion in the axial direction. An inner diameter of the tubular portion is formed to be equal to or slightly smaller than an outer diameter of the sealing assembly 17 (outer diameter of the rupture disc 24). The gasket 28 can be attached to the sealing assembly 17 with the tubular portion being spread and widened.

The sealing assembly 17, having the gasket 28 attached onto the peripheral edge, is inserted into the opening of the exterior can 16 before the crimped portion 31 is formed. Then, by crimping the end of the opening inward in the radial direction, the crimped portion 31 is formed.

The metal-made spacer 40 of the sealing assembly 17 of the present embodiment has a role as a height adjusting portion 40 for adjusting a height of the crimped portion 31. Namely, by selecting a plate thickness of the metal-made spacer 40 in consideration of thicknesses of the flange 27a, the rupture disc 24, and the gasket 28, the height of the crimped portion 31 can be formed to be a height equal to a height of the positive electrode cap 27.

Next, there are described conditions required for the height adjusting portion 40 for adjusting the height of the crimped portion 31.

As mentioned above, when making a plurality of batteries into a module, the positive electrode external terminals and the negative electrode external terminals of those are welded and connected to external leads. For welding the external leads, a smaller variation is better in terms of the heights of the crimped portions 31 among the individual batteries. Accordingly, it is requested that the height adjusting portion 40 does not deform during crimping of the crimped portion 31. Assuming that the height adjusting portion 40 is formed of a resin, it is compressed under crimping pressure, which causes an uneven height. Moreover, in order to make the heights of the positive electrode external terminal and the negative electrode external terminal even, it is requested that contraction and expansion due to variations in ambient temperature are approximately equal to those of the positive electrode cap 27. In order to meet these requests, the material of the height adjusting portion 40 needs to be a metal. It may be formed of the same material as that of the positive electrode cap 27 or the rupture disc 24.

Moreover, when the flange 27a is connected to the rupture disc 24 by welding as mentioned above, a bump arises at a welding portion 50 on the flange 27a. In order to absorb the bump at the welding portion 50 during crimping, the height adjusting portion 40 is preferably formed of aluminum.

The height adjusting portion 40 of the present embodiment is formed as a separate component from the rupture disc 24 and the flange 27a. As mentioned later, the height adjusting portion 40 may be formed by folding the rupture disc 24 or the flange 27a inward in the radial direction. Nevertheless, requests regarding the heights of the electrodes include not only a request to make the positive electrode external terminal and the negative electrode external terminal have the same heights but also a request to make the height of the crimped portion 31 larger than the height of the positive electrode cap 27. In order to handle various requests regarding height relationships among the electrodes, providing the separate height adjusting portion 40 is easier in terms of designing.

Furthermore, taking it into consideration to connect an external lead to the crimped portion 31, if the crimped portion 31 is curved, which causes a smaller contact area with the external lead, there arises a possibility of incomplete connection therebetween. In order to increase the contact area, the top surface of the crimped portion 31 is preferably formed to be flat. The top surface of the crimped portion 31 of the present embodiment is formed so as to extend to be flat in the inner diameter direction. In order to maintain the top surface of the crimped portion 31 to be flat, the tip of the height adjusting portion 40 in the inner diameter direction is formed so as to protrude more inward in the radial direction than the tip of the crimped portion 31. Likewise, the tip of the folding portion 24c of the rupture disc 24 in the inner diameter direction is formed so as to protrude more inward in the radial direction than the tip of the crimped portion 31. Since these are formed as above, the tip of the crimped portion 31 is restrained from being inclined toward the sealing assembly 17, and the top surface can be formed to be flat.

### (Second Embodiment)

FIG. 3 is a sectional view having the vicinity of a crimped portion of a non-aqueous electrolyte secondary battery according to a second embodiment of the present disclosure expanded. The sealing assembly 17 of the present embodiment is different from that of the first embodiment in employing a configuration that the folding portion 24c of the rupture disc 24 is eliminated, the height of the standing portion 24a is made smaller than or equal to the thickness of the flange 27a, and only the metal-made spacer 40 is comprised on the flange 27a.

In assembling steps of the sealing assembly 17 of the present embodiment, there is no step of crimping the metal-made spacer 40 with the folding portion 24c of the rupture disc 24 (assembling step 8 for the sealing assembly 17 in Embodiment 1). A method of fixing the metal-made spacer 40 is not limited but it may be fixed onto the flange 27a with adhesive at several places. Otherwise, the metal-made spacer 40 and the flange 27a may be welded.

Since in the present embodiment, the folding portion 24c of the rupture disc 24 does not exist, the metal-made spacer 40 that has a larger plate thickness is needed as compared with the first embodiment. Meanwhile, there is not needed folding processing in the inner diameter direction on the rupture disc 24.

As with the first embodiment, it is requested that in order to make connection with the external lead stable, the top surface of the crimped portion 31 is formed to be flat. Namely, also in the present embodiment, the tip of the metal-made spacer 40 in the inner diameter direction is formed so as to protrude more inward in the radial direction than the tip of the crimped portion 31. Since these are formed as above, the tip of the crimped portion 31 is restrained from being inclined toward the sealing assembly 17, and the top surface can be formed to be flat.

### (Third Embodiment)

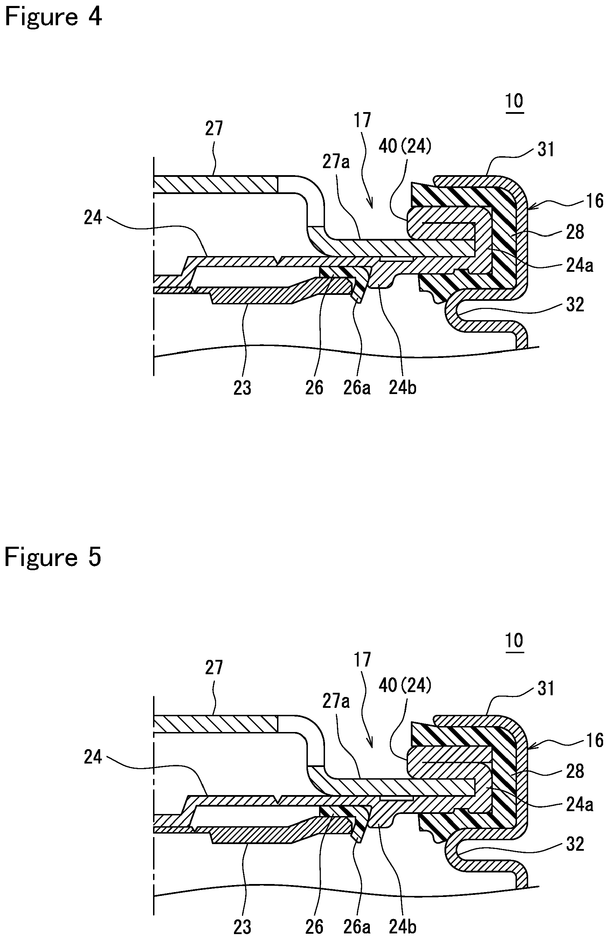

FIG. 4 is a sectional view having the vicinity of a crimped portion of a non-aqueous electrolyte secondary battery according to a third embodiment of the present disclosure expanded. In the present embodiment, the height adjusting portion 40 is configured by performing folding processing in the inner diameter direction on the peripheral edge of the rupture disc 24.

In the present embodiment, in the rupture disc 24 before the sealing assembly 17 is assembled, a length of the standing portion 24a on the peripheral edge is formed to be larger than that of the standing portion 24a of the first embodiment. In the state where the positive electrode cap 27 is inserted into the standing portion 24a, a length of the standing portion 24a that protrudes above from the flange 27a is formed to be about twice the length in the inner diameter direction after the standing portion 24a is folded after the sealing assembly 17 is assembled.

The sealing assembly 17 is formed as follows. The standing portion 24a is folded so as to be folded back in the inner diameter direction at the position, on the standing portion 24a, that is at half the length of the standing portion 24a that protrudes above from the flange 27a. Next, the folded-back portion thus formed is crimped inward in the radial direction to be shaped so as to interpose the flange 27a. In the present embodiment, a portion, of the rupture disc 24, that is folded and is in contact with the flange 27a works as the height adjusting portion 40. The number of times of folding the standing portion 24a of the rupture disc 24 is not limited to that shown in FIG. 4. It can be properly modified in accordance with the height of the crimped portion 31 and the thickness of the rupture disc 24.

FIG. 5 shows still another embodiment. In the present embodiment, the height adjusting portion 40 is configured by folding the end of the standing portion 24a of the rupture disc 24 outward in the radial direction, and after that, folding it inward.

### (Other Embodiments)

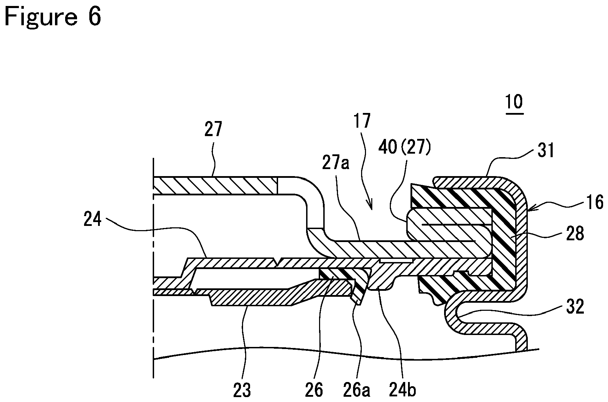

A method of forming the height adjusting portion 40 is not limited to those in the aforementioned embodiments. For example, as shown in FIG. 6, the height adjusting portion 40 may be formed by folding the peripheral edge of the flange 27a of the positive electrode cap 27 inward in the radial direction.

### REFERENCE SIGNS LIST

10 non-aqueous electrolyte secondary battery, 11 positive electrode, 12 negative electrode, 13 separator, 14 electrode assembly, 16 exterior can, 17 sealing assembly, 18 insulating plate, 19 insulating plate, 20 positive electrode lead, 21 negative electrode lead, 23 terminal plate, 24 rupture disc, 24a standing portion, 24b projection, 24c folding portion, 26 insulating plate, 26a standing portion, 27 positive electrode cap, 27a flange, 28 gasket, 30 bottomed tubular portion, 31 crimped portion, 32 grooved portion, 33 bottom, 40 height adjusting portion (metal-made spacer), 50 welding portion

## Claims

1. A sealed battery, comprising:
a bottomed tubular exterior can that houses an electrode assembly; and
a sealing assembly that closes an opening of the exterior can, wherein
at the exterior can, a crimped portion is formed by folding an end of the opening inward in a radial direction for crimping and fixing the sealing assembly, and
the sealing assembly has: a rupture disc; a positive electrode cap having a flange; and a metal-made height adjusting portion for adjusting a height of the crimped portion.

2. The sealed battery according to claim 1, wherein the height adjusting portion is a metal-made spacer and is arranged between an upper surface of the flange of the positive electrode cap and the rupture disc.

3. The sealed battery according to claim 1, wherein the height adjusting portion is a metal-made spacer and is arranged between an upper surface of the flange of the positive electrode cap and a gasket.

4. The sealed battery according to claim 1, wherein the height adjusting portion is formed by folding a peripheral edge of the rupture disc inward in the radial direction.

5. The sealed battery according to claim 1, wherein the height adjusting portion is formed by folding a peripheral edge of the flange of the positive electrode cap inward in the radial direction.

6. The sealed battery according to claim 2 or 3, wherein the metal-made spacer is welded or adhesively bonded to the flange.
